# EUROPÄISCHE PATENTSCHRIFT

(11) **EP 2 299 853 B1**
(45) Veröffentlichungstag und Bekanntmachung des Hinweises auf die Patenterteilung: **29.06.2016**
(21) Anmeldenummer: 09761374.9
(22) Anmeldetag: 19.05.2009
(51) Int. Cl.: A23L 2/46, A23L 3/18

(54) **PASTEURISIERUNGSANLAGE**
PASTEURIZATION INSTALLATION
INSTALLATION DE PASTEURISATION

(30) Priorität: 10.06.2008 DE 102008027492
(43) Veröffentlichungstag der Anmeldung: 30.03.2011
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2009/003536
(87) Internationale Veröffentlichungsnummer: WO 2009/149811

(56) Entgegenhaltungen:
- EP-A2- 0 100 833
- WO-A1-2007/042593
- US-A- 4 463 025
- DATABASE FSTA [Online] INTERNATIONAL FOOD INFORMATION SERVICE (IFIS), FRANkFURT-MAIN, DE; 2008, TORRES E F; BAYARRI S; SAMPEDRO F; MARTINEZ A; CARBONELL J V: "Improvement of the fresh taste intensity of processed clementine juice by separate pasteurization of its serum and pulp." XP002544001 Database accession no. 2009-00-h2544

## Beschreibung

Die Erfindung bezieht sich auf eine Anlage gemäß Oberbegriff Patentanspruch 1.

Produkte, die einen flüssigen Bestandteil und zusätzlich faserförmige und/oder feste bzw. festere Bestandteile enthalten, sind insbesondere auch als Getränke bekannt, beispielsweise in Form von Fruchtsäften mit Fruchtzellen und/oder Fruchtfleisch und/oder Fruchtstücken, wie z.B. Orangensaft mit Fruchtfleisch usw. Es ist weiterhin auch bekannt, derartige Produkte zur Erzielung der notwendigen Haltbarkeit in heißsteriler oder in pasteurisierter Form in Flaschen oder in anderen Behältern abzufüllen, und zwar beispielsweise unter Verwendung einer Füllmaschine umlaufender Bauart, der dann das jeweilige Produkt als fertige Mischung seiner Bestandteile nach dem Passieren einer Einrichtung zum Pasteurisieren bzw. Erhitzen zugeführt wird.

Anlagen zur Bereitstellung von Produkten, insbesondere von Fruchtsäften, die einen flüssigen und einen faserförmigen oder festen Bestandteil (z.B, Fruchtfleisch) aufweisen sind bekannt (WO 2007/042593 A1, Database FSTA, INTERNATIONAL FOOD INFORMATION SERVICE, Frankfurt-Main 2009-00-h2544). Hierbei Ist es auch bekannt, die flüssigen Bestandteile (z.B. Fruchtsaft) und die faserförmigen oder festeren Bestandteile (z.B. Fruchtfleisch) solcher Produkte getrennt zu pasteurisieren und getrennt bereit zu stellen.

Aufgabe der Erfindung ist es, eine Anlage aufzuzeigen, die eine vereinfachte Bereitstellung und/oder Verarbeitung eines Produktes z.B. in einer Füllmaschine ermöglicht, welches (Produkt) aus wenigstens einem flüssigen Bestandteil und wenigstens einem faserförmigen und/oder festen Bestandteil besteht. Zur Lösung dieser Aufgabe ist eine Anlage entsprechend dem Patentanspruch 1 ausgebildet.

Eine Besonderhelt der erfindungsgemäßen Anlage besteht darin, dass diese den wenigstens einen flüssigen Bestandteil als eine erste Komponente und die faserförmigen und/oder festen Bestandteile in hochkonzentrierter Form vermischt mit einem flüssigen Bestandteil an wenigstens einem zweiten Auslass als zweite Komponente bereitstellt, so dass diese Komponenten einer nachfolgenden Anlage oder Maschine, beispielsweise einer nachfolgenden Füllmaschine getrennt zugeführt werden können und erst dort, beispielsweise unmittelbar vor dem Einbringen und/oder beim Einbringen in einen Behälter und/oder erst in dem jeweiligen Behälter zusammengeführt bzw. gemischt werden. Zur Bereitstellung der zweiten Komponente werden die faserförmigen und/oder festen Bestandteile mit einem flüssigen Bestandteil, beispielsweise mit einem Anteil der ersten Komponente schonend soweit vorverdünnt oder vorgemischt, bis die die faserförmigen und/oder festen Bestandteile enthaltende Mischung fließfähig Ist.

Durch die getrennte Bereitstellung der Komponenten Ist es insbesondere auch möglich, diese innerhalb der Anlage In eigenstäncligen Einrichtungen, beispielsweise in eigenständigen Wärmetauschern für das Pasteurisieren oder Sterilisieren zu erhitzen, mit dern entscheidenden Vorteil, dass diese Einrichtungen an die Komponenten optimal angepasst werden können. So kann dann beispielsweise für die flüssige Komponente als Einrichtung für das Pasteurisieren oder Sterilisieren einen Plattenwärmetauscher zu verwenden, der bei hohem Wirkungsgrad einen hohen Durchsatz (erhitztes Volumen je Zeiteinheit) ermöglicht, während für die zweite Komponente als Einrichtung für das Pasteurisieren oder Sterilisieren ein Wärmetauscher verwendet wird, der zwar einen geringeren Durchsatz aufweist, aber einen für die faserförmigen und/oder festen Bestandteile ausreichend großen effektiven Strömungsquerschnitt besitzt.

Um eine Zerstörung der Struktur der faserförmigen und/oder festen Bestandteile zu vermeiden, ist die erfindungsgemäße Anlage weiterhin so ausgebildet, dass im Strömungsweg der zweiten Komponente Innerhalb der Anlage sowie auch in der Verbindung zwischen dem wenigstens einen zweiten Auslass und einer nachfolgenden Maschine oder Anlage keine mechanischen Pumpen vorgesehen sind, sondern die Förderung der zweiten Komponente ausschließlich durch den Druck eines sterilen gas- und/oder dampfförmigen Druckmediums erfolgt.

Weiterbildungen, Vorteile und Anwendungsmöglichkeiten der Erfindung ergeben sich auch aus der nachfolgenden Beschreibung von Ausführungsbeispielen und aus den Figuren.

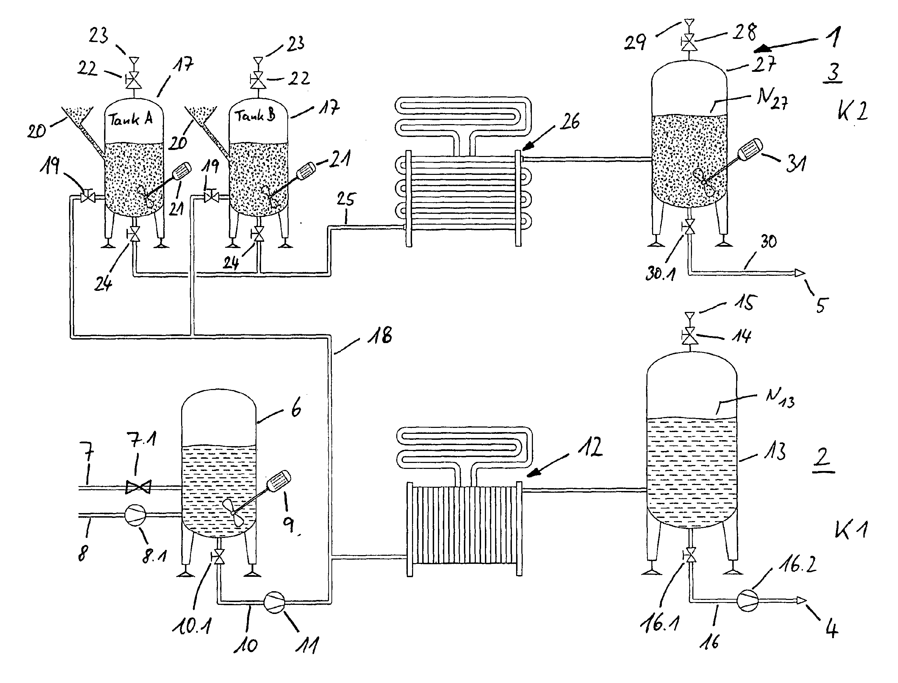

Die Erfindung wird im Folgenden anhand der Figur, die in schematischer Funktionsdarstellung eine Anlage 1 zum Bereitstellen von zwei Komponenten K1 und K2 eines in Behälter, beispielsweise in Flaschen abzufüllenden Produktes zeigt, näher erläutert.

Bei der dargestellten Ausführungsform besteht die Anlage 1 im Wesentlichen aus zwei Anlagenabschnitten 2 und 3, von denen der Anlagenabschnitt 2 an seinem Auslass 4 die Komponente K1 in Form eines flüssigen Produktes, z.B. in Form des flüssigen Bestandteils eines Fruchtsaftes und der Anlagenbereich 3 an seinem Auslass die Komponente K2 bereitstellt, die faserförmige und/oder feste und/oder festere Bestandteile, beispielsweise Fruchtstücke und/oder Fruchtfleisch und/oder -zellen in Mischung mit einem geringen Anteil der flüssigen Komponente K1 enthält, so dass die Komponente K2 gerade noch fließfähig ist.

Beide Komponenten K1 und K2, die in der Anlage 1 durch Hitzeeinwirkung sterilisiert oder pasteurisiert wurden, werden getrennt einer nicht dargestellten Füllmaschine bzw. dortigen, jeweils ein Füllelement aufweisenden Füllpositionen zugeführt. Das Vermischen oder Zusammenführen der beiden Komponenten K1 und K2 erfolgt dann z.B. in dem jeweiligen Füllelement oder in einer Vor- oder Mischkammer des jeweiligen Füllelementes oder der Füllmaschine und/oder in dem den jeweiligen Behälter zufließenden Füllgutstrahl und/oder in dem jeweiligen Behälter.

Zur Bereitstellung der ersten Komponente K1 weist der Anlagenabschnitt 2 einen Mischtank 6 auf, dem bei der dargestellten Ausführungsform über eine Leitung 7 Wasser und über eine weitere Leitung 8 dosiert ein Konzentrat, beispielsweise ein Fruchtsaftkonzentrat in dem erforderlichen Mischungsverhältnis zugeführt werden. Zu diesem Zweck sind in der Leitung 7 wenigstens ein steuerbares Ventil 7.1 und in der Leitung 8 eine Dosierpumpe 8.1 vorgesehen. Durch eine Mischeinrichtung 9 erfolgt im Mischtank 6 das Vermischen von Wasser und Konzentrat.

Der Mischtank6 ist über eine ein Ventil 10.1 aufweisende Leitung 10 mit dem Eingang einer Produktpumpe 11 verbunden, die mit ihrem Auslass u.a. über einen Wärmetauscher 12 mit einem Sterilpuffertank 13 verbunden ist, der während des Betriebes der Anlage 1 bis zu einem vorgegebenen Niveau N₁₃ mit der zuvor im Wärmetauscher 12 zum Pasteurisieren oder Sterilisieren erhitzten Komponente K1 gefüllt ist, so dass oberhalb des Niveaus N₁₃ bzw. oberhalb des von der Komponente K1 eingenommenen Flüssigkeitsraum ein Gasraum gebildet ist, der über ein Ventil 14 gesteuert, beispielsweise druckgesteuert mit einem sterilen gas- und/oder dampfförmigen Druckmedium, z.B. Inertgas, beispielsweise mit CO2-Gas aus einer Leitung 15 beaufschlagt ist. An den Boden des Sterilpuffertanks 13 ist eine den Auslass 4 bildende Produktleitung 16 mit Auslassventil 16.1 und Produktpumpe 16.2 angeschlossen.

Der Anlagenabschnitt 3 umfasst zwei Mischtanks 17, die mit einer sich verzweigende Produktleitung 18 mit dem Ausgang der Produktpumpe 11 verbunden sind, und zwar über jeweils ein Einlassventil 19. Jeder Mischtank 17 ist weiterhin mit einer Beschickungs- oder Aufgabeeinheit 20 versehen, die bei der dargestellten Ausführungsform im Wesentlichen von einem Trichter gebildet ist, über den die faserförmigen und/ oder festen und/oder festere Bestandteile in den jeweiligen Mischtank 17 eingebracht werden können. Weiterhin ist jeder Mischtank 17 mit einem Mischelement 21 versehen und über ein Steuerventil 22 mit einer ein steriles gas- und/oder dampfförmiges Druckmedium führenden Leitung 23 verbunden. Am Bodenbereich ist jeder Mischtank 17 über ein Auslassventil 24 an eine Produktleitung 25 angeschlossen, die die Mischtanks 17 über einen Wärmetauscher 26 mit dem Einlass eines Sterilpuffertanks 27 verbindet. Dieser ist während des Betriebes der Anlage 1 bis zu einem vorgegebenen Niveau N₂₇ mit der zuvor im Wärmetauscher 26 zum Pasteurisieren oder Sterilisieren erhitzten Komponente K2 gefüllt ist, so dass oberhalb des Niveaus N₂₇ bzw. oberhalb des von der Komponente K2 eingenommenen Flüssigkeitsraum ein Gasraum gebildet ist, der über ein Ventil 28 mit einer ein steriles gas- und/oder dampfförmiges Druckmedium führenden Leitung 29 verbunden ist.

An den Boden des Sterilpuffertanks 27 ist eine bodenseitiges Ventil 30.1 aufweisende Produktleitung 30 angeschlossen, die den Auslass 5 für die Komponente K2 bildet. Im Inneren des Sterilpufferspeichers 27 ist weiterhin eine Mischeinrichtung 31 vorgesehen.

Während des Betriebes wird in den Mischtanks 17 die Komponente K2 durch Mischen der über die Produktleitung 18 zugeführten flüssigen Komponente und der über die jeweilige Aufgabeeinheit 20 zugeführten faserförmigen und/oder festen Bestandteile vorgemischt. Das erforderliche Mischungsverhältnis ist dabei beispielsweise so eingestellt, dass die erhaltene Komponente K2 noch fließfähig oder gerade noch fließfähig ist. Der Mischvorgang wird durch entsprechendes Öffnen und Schließen der Ventile 19 und durch entsprechende Ansteuerung der jeweiligen Aufgabeeinheit 20 gesteuert bzw. geregelt. Ist das erforderliche Mischverhältnis in einem Mischtank 17 erreicht, so wird nach dem Schließen des zugehörigen Ventils 19 und nach dem Sperren der zugehörigen Aufgabeeinheit 20 der oberhalb der Komponente K2 vorhandene, d.h. von dieser Komponente nicht eingenommene Gasraum des betreffendes Mischtanks 17 durch das Öffnen des Ventils 22 mit dem unter Druck des sterilen gas- und/oder dampfförmigen Druckmediums beaufschlagt, so dass die Komponente K2 dann beim Öffnen des Auslassventils 24 über die Leitung 25 und den Wärmetauscher 26 in den Sterilpufferspeicher 27 eingebracht werden kann. Nach dem Entleeren eines Mischtanks 17 in den Sterilpufferspeicher 27 werden die Ventile 22 und 24 wieder geschlossen, so dass in dem betreffenden Pufferspeicher 17 wiederum erneut die Komponente K2 vorgemischt werden kann.

Um sicher zu stellen, dass die Anlage 1 die Komponente K2 trotz der für das Mischen dieser Komponente benötigten Zeit einer mit hoher Leistung arbeitenden Füllmaschine in ausreichendem Maße zur Verfügung stellt, sind die beiden Mischtanks 17 vorzugsweise im Gegentakt betrieben, d.h. während des Entleerens eines Mischtanks 17 über den Wärmetauscher 26 in den Sterilpufferspeicher 27 erfolgt das Vormischen der Komponente K2 in dem anderen Mischtank 17. Ein Entmischen der Komponente K2 im Sterilpufferspeicher 27 wird durch das dortige Mischelement 31 verhindert. Die Abgabe der Komponente K2 aus dem Sterilpufferspeicher 27 erfolgt dadurch, dass der oberhalb des Niveaus N₂₇ im Sterilpufferspeicher 27 gebildete Gasraum über das geöffnete Ventil 28 mit dem Druck des sterilen gas- und/oder dampfförmigen Druckmediums beaufschlagt wird, so dass durch Öffnen des Bodenventils 30.1 die Komponente K2 über den Auslass 5 an die Füllmaschine gefördert wird.

Besonderheiten der Anlage 1 sind u.a.:

Die Anlage 1 stellt die beiden Komponenten K1 und K2 an den Ausgängen 4 und 5 in sterilisierter bzw. pasteurisierter Form der nachfolgenden Füllmaschine gesondert zur Verfügung, so dass das Mischen und/oder Zusammenführen dieser Komponenten in dem jeweils gewünschten Verhältnis innerhalb der Füllmaschine und/oder innerhalb der zu füllenden Behälter und/oder in dem den Behältern beim Füllen zufließende Produktstrom möglich ist.

Der Wärmetauscher 12 ist also Plattenwärmetauscher mit hohem Wirkungsgrad ausgebildet, der aus ermöglicht, bei reduzierter Baugröße ein großes Volumen der Komponente K1 zu pasteurisieren bzw. sterilisieren, d.h. auf die hierfür erforderliche Temperatur von wenigstens 70°C zu erhitzen.

Der Wärmetauscher 26 ist hingegen als Röhrenwärmetauscher ausgebildet, der zwar einen im Vergleich zu dem Plattenwärmetauscher 12 reduzierten Durchsatz (erhitztes Volumen je Zeiteinheit) aufweist, aber für die Komponente K2 einen relativ großen effektiven Strömungsquerschnitt gewährleistet, so dass diese Komponente, die ohnehin nur in einem im Vergleich zur Komponente K1 geringeren Anteil erforderlich ist, mit einem hohen Anteil an Faser- und/oder Feststoffen vorgemischt werden kann.

Während für die Förderung der Komponente K1 Produktpumpen 11 bzw. 15 vorgesehen sind, erfolgt die Förderung der Komponente K2 innerhalb der Anlage 1, aber auch von dem Sterilpufferspeicher 27 an die Füllmaschine ohne derartige Pumpen allein durch den Druck des sterilen dampf- und/oder gasförmigen Druckmediums.

Um sicher zu stellen, dass zum Entleeren des jeweiligen Mischtanks 17 die Komponente K2 aus diesem Mischtank durch den Wärmetauscher 26 in den Sterilpufferspeicher 27 fließt, ist der Druck des sterilen gas- und/oder dampfförmigen Druckmediums, mit dem der Gasraum des jeweiligen Mischtanks 17 beaufschlagt wird, etwas größer als der Druck im Gasraum des Sterilpufferspeichers 27.

Es versteht sich, dass beide Wärmetauscher 12 und 26 jeweils mit ihren Heizkanälen an einen eine Heizeinrichtung aufweisenden Heizkreislauf angeschlossen sind.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Anlage
- 2, 3: Anlagenabschnitt
- 4, 5: Auslass
- 6: Mischtank für Komponente K1
- 7,8: Leitungen
- 7.1,8.1: Ventile
- 9: Mischeinrichtung
- 10: Leitung
- 10.1: Ventil
- 11: Produktpumpe
- 12: Wärmetauscher
- 13: Sterilpuffertank
- 14: Ventil
- 15: Leitung für unter Druck stehendes steriles gas- und/oder dampfförmiges Medium
- 16: Produktleitung
- 16.1: Auslassventil
- 16.2: Produktpumpe
- 17: Mischtank
- 18: Produktleitung
- 19: Ventil
- 20: Aufgabeeinheit für Faser- und/oder Festbestandteile
- 21: Mischelement
- 22: Ventil
- 23: Leitung für unter Druck stehendes steriles dampf- und/oder gasförmiges Medium
- 24: Auslassventil
- 25: Produktleitung
- 26: Wärmetauscher
- 27: Sterilpufferspeicher
- 28: Ventil
- 29: Leitung für ein steriles gas- und/oder dampfförmiges Druckmedium
- 30: Produktleitung
- 30.1: Auslassventil
- 31: Mischelement
- K1: flüssige Komponente
- K2: Komponente mit einem hohen Faser- und/oder Feststoffanteil
- N₁₃, N₂₇: Niveau

## Patentansprüche

1. Anlage zum Bereitstellen eines wenigstens einen flüssigen Bestandteil und wenigstens einen faserförmigen und/oder festen Bestandteil aufweisenden Produktes in sterilisierter oder pasteurisierter Form, mit wenigstens einem ersten Auslass (4) zur Bereitstellung des flüssigen Bestandteils als erste Komponente (K1) sowie mit wenigstens einem zweiten Auslass (5) zur Bereitstellung einer zweiten Komponente (K2), die den faserförmigen und/oder festen Bestandteil in Mischung mit einem flüssigen Bestandteil enthält, **dadurch gekennzeichnet, dass** die Förderung der zweiten Komponente (K2) Innerhalb der Anlage und von dem wenigstens einen zweiten Auslass (5) an eine nachfolgende Maschine ohne Pumpen ausschließlich durch den Druck eines sterilen gas- und/oder dampfförmigen Druckmediums erfolgt,

2. Anlage nach Anspruch 1, **dadurch gekennzeichnet, dass** für das Pasteurisieren oder Sterilisieren der Komponenten (K1, K2) jeweils eine eigenständige Einrichtung, beispielsweise in Form eines Wärmetauschers (12, 26) vorgesehen ist.

3. Anlage nach Anspruch 2, **dadurch gekennzeichnet, dass** für das Pasteurisieren oder Sterilisieren der ersten, flüssigen Komponente (K1) wenigstens ein Plattenwärmetauscher (12) vorgesehen ist.

4. Anlage nach einem der vorhergehenden Ansprüche, **dadurch gekennzeichnet, dass** für das Pasteurisieren der zweiten Komponente (K2) wenigstens ein Röhrenwärmetauscher (26) vorgesehen ist.

5. Anlage nach einem der vorhergehenden Ansprüche, **dadurch gekennzeichnet, dass** für die Förderung der ersten Komponente innerhalb der Anlage (1) und/oder von dem ersten Auslass (4) an eine nachfolgende die Komponenten (K1, K2) verarbeitende Maschine, beispielsweise an eine Füllmaschine, wenigstens eine Produktpumps (11. 16.2) vorgesehen ist.

6. Anlage nach einem der vorhergehenden Ansprüche, **dadurch gekennzeichnet, dass** sie wenigstens zwei Anlagenabschnitte (2, 3) aufweist, von denen ein erster Anlagenabschnitt (2) den wenigstens einen ersten Auslass (4) und ein zweiter Anlagenabschnitt (3) den wenigstens einen zweiten Auslass (5) aufweist, und dass im zweiten Anlagenabschnitt (3) wenigstens ein Mischtank (17) zum Vormischen der zweiten Komponente (K2) aus einem flüssigen Bestandteil und den faserförmigen und/oder festen Bestandteilen vorgesehen ist, und dass der wenigstens eine Mischtank (17) zum Fördern der durch Mischen erzeugten zweiten Komponente (K2) durch die Einrichtung (26) zum Sterilisieren oder Pasteurisieren mit einem sterilen dampf- und/oder gasförmigen Druckmedium beaufschlagbar ist.

7. Anlage nach Anspruch 6, **dadurch gekennzeichnet, dass** der zweite Anlagenabschnitt (3) wenigstens zwei Mischtanks (17) aufweist.

8. Anlage nach einem der vorhergehenden Ansprüche, **dadurch gekennzeichnet, dass** der erste Anlagenabschnitt (2) einen Mischtank (6) zum Herstellen der ersten Komponente (K1) durch Mischen aus Wasser und aus wenigstens einem Konzentrat aufweist.

9. Anlage nach einem der vorhergehenden Ansprüche, **dadurch gekennzeichnet, dass** dem wenigstens einen ersten Auslass (4) und/oder dem wenigstens einen zweiten Auslass (5) jeweils ein Sterilpufferspeicher (13, 27) zugeordnet ist, und dass vorzugsweise zumindest der Sterilpufferspeicher (27) für die zweite Komponente (K2) mit einem sterilen gas- und/oder dampfförmigen Druckmedium beaufschlagbar ist.

## Claims

1. An installation for providing a product in sterilised and/or pasteurised form, comprising at least one liquid component and at least one fibrous and/or solid component, with at least one outlet (4) for providing the liquid component as a first component (K1) and with at least one second outlet (5) for providing a second component (K2), which contains the fibrous and/or solid component in a mixture with a liquid component, **characterised in that** the transporting of the second component (K2) inside the installation and from the at least one second outlet (5) to a downstream machine takes place without pumping, exclusively by the pressure of a sterile gaseous and/or vaporous pressure medium.

2. The installation according to claim 1, **characterised in that**, for the pasteurising or sterilising of the components (K1, K2), in each case an independent device is provided for, for example in the form of a heat exchanger (12, 26).

3. The installation according to claim 2, **characterised in that**, for the pasteurising or sterilising of the first liquid component (K1) at least one plate heat exchanger (12) is provided for.

4. The installation according any one of the preceding claims, **characterised in that**, for the pasteurising or sterilising of the second liquid component (K2) at least one tubular heat exchanger (26) is provided for.

5. The installation according to any one of the preceding claims, **characterised in that**, for the transporting of the first component inside the installation (1) and/or from the first outlet (4) to a processing machine downstream of the components (K1, K2), for example a filling machine, at least one product pump (11, 16.2) is provided for.

6. The installation according to any one of the preceding claims, **characterised in that** it comprises at least two installation sections (2, 3), of which a first installation section (2) comprises the at least one first outlet (4) and a second installation section (3) comprises the at least one second outlet (5), and that, in the second installation section (3), at least one mixing tank (17) is provided, for the pre-mixing of the second component (K2) from a liquid component and the fibrous and/or solid components, and that the at least one mixing tank (17) can be subjected to a sterile vaporous and/or gaseous pressure medium for the transporting of the second component (K2), produced by the mixing, through the device (28) for the sterilising or pasteurising.

7. The installation according to claim 6, **characterised in that** the second installation section (3) comprises at least two mixing tanks (17).

8. The installation according to any one of the preceding claims, **characterised in that** the first installation section (2) comprises a mixing tank (6) for producing the first component (K1) by mixing from water and from at least one concentrate.

9. The installation according to any one of the preceding claims, **characterised in that** in each case a sterile buffer store (13, 27) is allocated to the at least one first outlet (4) and/or to the at least one second outlet (5), and that preferably at least the sterile buffer store (27) for the second component (K2) can be subjected to pressure with a sterile gaseous and/or vaporous pressure medium.

## Revendications

1. Installation servant à fournir un produit, présentant au moins un constituant liquide et au moins un constituant fibreux et/ou solide, sous une forme stérilisée ou pasteurisée, comprenant au moins une première sortie (4) servant à fournir le constituant liquide faisant office de premier composant (K1) ainsi qu'au moins une deuxième sortie (5) servant à fournir un deuxième composant (K2), qui contient le constituant fibreux et/ou solide mélangé à un constituant liquide, **caractérisée en ce que** le transport du deuxième composant est effectué, à l'intérieur de l'installation et depuis la deuxième sortie (5) au moins au nombre de une à une machine qui suit sans pompe, exclusivement par la pression d'un agent sous pression stérile sous forme de gaz et/ou sous forme de vapeur.

2. Installation selon la revendication 1, **caractérisée en ce que** respectivement un système autonome, se présentant par exemple sous la forme d'un échangeur de chaleur (12, 26), est prévu en vue de la pasteurisation ou de la stérilisation des composants (K1, K2).

3. Installation selon la revendication 2, **caractérisée en ce qu'**au moins un échangeur de chaleur à plaques (12) est prévu en vue de la pasteurisation ou de la stérilisation du premier composant (K1) liquide.

4. Installation selon l'une quelconque des revendications précédentes, **caractérisée en ce qu'**au moins un échangeur de chaleur tubulaire (26) est prévu en vue de la pasteurisation du deuxième composant (K2).

5. Installation selon l'une quelconque des revendications précédentes, **caractérisée en ce qu'**au moins une pompe de produit (11, 16.2) est prévue en vue du transport du premier composant à l'intérieur de l'installation (1) et/ou depuis la première sortie (4) à une machine qui suit transformant les composants (K1, K2), par exemple vers une machine de remplissage.

6. Installation selon l'une quelconque des revendications précédentes, **caractérisée en ce qu'**elle présente au moins deux tronçons d'installation (2, 3), parmi lesquels un premier tronçon d'installation (2) présente la première sortie (4) au moins au nombre de une et un deuxième tronçon d'installation (3) présente la deuxième sortie (5) au moins au nombre de une, et **en ce qu'**au moins un réservoir de mélange (17) servant à mélanger au préalable le deuxième composant (K2) composé d'un constituant liquide et des constituants fibreux et/ou solides est prévu dans le deuxième tronçon d'installation (3), et **en ce que** le réservoir de mélange (17) au moins au nombre de un servant à transporter le deuxième composant (K2) produit par l'action de mélanger à travers le système (26) servant à la stérilisation ou à la pasteurisation peut être soumis à l'action d'un agent sous pression stérile sous forme de vapeur et/ou sous forme de gaz.

7. Installation selon la revendication 6, **caractérisée en ce que** le deuxième tronçon d'installation (3) présente au moins deux réservoirs de mélange (17).

8. Installation selon l'une quelconque des revendications précédentes, **caractérisée en ce que** le premier tronçon d'installation (2) présente un réservoir de mélange (6) servant à préparer le premier composant (K1) par un mélange à partir d'eau et à partir d'au moins un concentré.

9. Installation selon l'une quelconque des revendications précédentes, **caractérisée en ce que** respectivement un système de stockage de mise en tampon stérile (13, 27) est associé à la première sortie (4) au moins au nombre de une et/ou à la deuxième sortie (5) au moins au nombre de une, et **en ce que** de préférence au moins le système de stockage de mise en tampon stérile (27) pour le deuxième composant (K2) peut être soumis à l'action d'un agent sous pression stérile sous forme de gaz et/ou sous forme de vapeur.
